# EUROPEAN PATENT APPLICATION

(11) **EP 4 656 468 A1**
(43) Date of publication of application: **03.12.2025**
(21) Application number: 23918406.2
(22) Date of filing: 27.01.2023
(51) Int. Cl.: B60R 99/00, B60W 30/06, B60W 50/10, B60W 50/14

(54) **PARKING ASSISTANCE METHOD AND PARKING ASSISTANCE DEVICE**

(71) Applicant: Nissan Motor Co., Ltd., Kanagawa 221-0023 (JP)
(72) Inventor: MUSHA, Yusuke, Atsugi-shi, Kanagawa 243-0123 (JP); SUZUKI, Yasuhiro, Atsugi-shi, Kanagawa 243-0123 (JP)
(74) Representative: Grünecker Patent- und Rechtsanwälte PartG mbB
(86) International application number: PCT/JP2023/002589
(87) International publication number: WO 2024/157444

(57) **Abstract**

A parking assistance method for assisting parking of an own vehicle at a target parking position includes: permitting, in a case where when accepting, while having selected one mode of a first assistance mode (ST01) for assisting parking with a pre-registered parking position candidate set as the target parking position and a second assistance mode (ST02) for assisting parking with the target parking position set without using a pre-registered parking position candidate, a switching instruction to the other mode, the own vehicle is stopping, switching from the one mode to the other mode (C1 and C3); and not permitting, in a case where when accepting the switching instruction, the own vehicle is not stopping, switching from the one mode to the other mode (C2 and C4).

## Description

### Technical Field

The present invention relates to a parking assistance method and a parking assistance device.

### Background Art

In PTL 1 described below, a parking control device configured to select a first automatic parking mode or a second automatic parking mode depending on a shift position is described.

### Citation List

### Patent Literature

PTL 1: JP 2021-079881 A

### Summary of Invention

### Technical Problem

When a parking assistance device configured to assist parking of an own vehicle at a target parking position has a plurality of different assistance modes, it is suitable for a user to be able to switch the assistance modes arbitrarily. However, there is a risk that attention of the user to the surroundings becomes distracted due to the switching operation between the assistance modes.

An object of the present invention is to improve, in a parking assistance device having a plurality of different assistance modes, safety in switching between the assistance modes.

### Solution to Problem

According to one aspect of the present invention, a parking assistance method for assisting parking of an own vehicle at a target parking position is provided. The parking assistance method includes: permitting, in a case where when accepting, while having selected one mode of a first assistance mode for assisting parking with a pre-registered parking position candidate set as the target parking position and a second assistance mode for assisting parking with the target parking position set without using a pre-registered parking position candidate, a switching instruction to the other mode, the own vehicle is stopping, switching from the one mode to the other mode; and not permitting, in a case where when accepting the switching instruction, the own vehicle is not stopping, switching from the one mode to the other mode.

### Advantageous Effects of Invention

According to the present invention, it is possible to improve, in a parking assistance device having a plurality of different assistance modes, safety in switching between the assistance modes.

The object and advantages of the invention will be realized and attained by means of the elements and combinations particularly pointed out in the claims. It is to be understood that both the foregoing general description and the following detailed description are exemplary and explanatory and are not restrictive of the invention.

### Brief Description of Drawings

FIG. 1 is a diagram illustrative of a schematic configuration example of a parking assistance device of embodiments;
FIGS. 2A and 2B are schematic diagrams descriptive of parking assistance control in a first assistance mode;
FIG. 3 is a schematic diagram descriptive of parking assistance control in a second assistance mode;
FIG. 4 is a state transition diagram of an example of operating states of the parking assistance device of a first embodiment;
FIG. 5 is a block diagram of an example of a functional configuration of a controller in FIG. 1;
FIGS. 6A to 6C are schematic diagrams illustrative of parking assistance screens in the first assistance mode;
FIGS. 7A to 7C are schematic diagrams illustrative of parking assistance screens in the second assistance mode;
FIG. 8 is a flowchart of an operation example at the start of the parking assistance control; and
FIG. 9 is a state transition diagram of an example of operating states of a parking assistance device of a second embodiment.

### Description of Embodiments

### (First Embodiment)

### (Configuration)

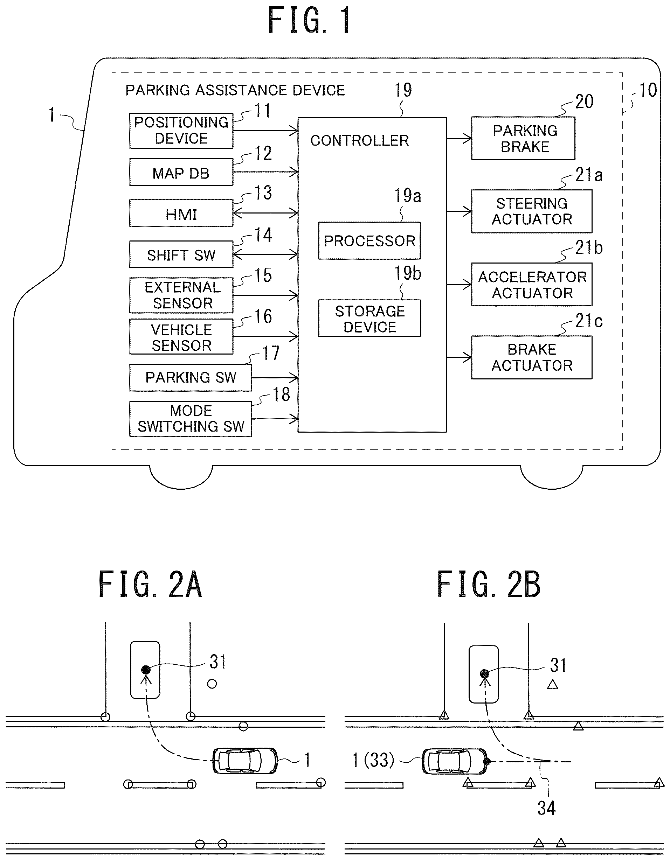

FIG. 1 is a diagram illustrative of a schematic configuration example of a parking assistance device of embodiments. An own vehicle 1 includes a parking assistance device 10 configured to assist parking of the own vehicle 1 at a target parking position. The parking assistance device 10 assists the own vehicle 1 in traveling along a target parking route from a current position of the own vehicle 1 to the target parking position. For example, the driving assistance device 10 may perform autonomous driving to control the own vehicle 1 to travel to the target parking position along the target parking route of the own vehicle 1. The autonomous driving to control the own vehicle 1 to travel to the target parking position along the target parking route means control to automatically perform all or a portion of travel along the target parking route of the own vehicle 1 by controlling all or some of a steering angle, driving force, and braking force of the own vehicle 1. Alternatively, the parking assistance device 10 may assist a user on board the own vehicle 1 (for example, a passenger such as a driver) in parking the own vehicle 1 by displaying the target parking route and the current position of the own vehicle 1 on a display device that the user can visually recognize.

A positioning device 11 measures the current position of the own vehicle 1. The positioning device 11 includes, for example, a global navigation satellite system (GNSS) receiver. In a map database (map DB) 12, map data are stored. The map data stored in the map database 12 may be, for example, map data for navigation or high-definition map data that is suitable as a map for autonomous driving.

Human-machine interfaces (HMIs) 13 are interface devices that transfer information between the parking assistance device 10 and the user. For example, the HMIs 13 may include a display device that the user can visually recognize, as an interface presenting visual information to the user. In addition, the HMIs 13 may include a speaker or a buzzer as an interface presenting auditory information to the user. In addition, the HMIs 13 may include an interface (such as a touch panel, a button, a switch, a lever, a dial, and a keyboard) accepting an operation input from the user.

A shift switch (shift SW) 14 is a switch for the driver or the parking assistance device 10 to switch a shift position of the own vehicle 1.

External sensors 15 detect an object existing in a predetermined distance range from the own vehicle 1. The external sensors 15 detect a surrounding environment of the own vehicle 1, such as a relative position between an object existing in surroundings of the own vehicle 1 and the own vehicle 1, distance between the own vehicle 1 and the object, and a direction in which the object exists. The external sensors 15 may include, for example, a camera to capture an image depicting the surrounding environment of the own vehicle 1. The external sensors 15 may include a ranging device, such as a laser range finder, a radar, a light detection and ranging (LiDAR), and a sonar. Vehicle sensors 16 detect various information (vehicle information) about the own vehicle 1. For example, the vehicle sensors 16 may include a vehicle speed sensor to detect traveling speed of the own vehicle 1, a triaxial acceleration sensor to detect acceleration (including deceleration) in three axial directions of the own vehicle 1, and a sensor to detect a steering angle of a steering wheel or a steered angle of steered wheels.

A parking switch (parking SW) 17 is a switch to start parking assistance control performed by the parking assistance device 10.

A mode switching switch (mode switching SW) 18 is a switch to switch control modes of the parking assistance control performed by the parking assistance device 10. For example, a touch panel may be installed on the display device in the HMIs 13 and an operation of the user touching an image of the mode switching switch 18 displayed on the display device may be detected by the touch panel. The mode switching switch 18 does not need to be installed exclusively on the touch panel and may be installed anywhere within the vehicle where the user can touch.

A controller 19 is an electronic control unit that performs parking assistance control of the own vehicle 1. The controller 19 includes a processor 19a and a peripheral component, such as a storage device 19b. The processor 19a may be, for example, a CPU or an MPU. The storage device 19b may include a semiconductor storage device, a magnetic storage device, an optical storage device, or the like. Functions of the controller 19, which will be described below, are achieved by, for example, the processor 19a executing computer programs stored in the storage device 19b.

A parking brake 20 generates friction braking force on wheels of the own vehicle 1 in accordance with operation by the user or a control signal from the controller 19.

A steering actuator 21a controls steering direction and the amount of steering of a steering mechanism of the own vehicle 1 in accordance with a control signal from the controller 19. An accelerator actuator 21b controls accelerator opening of a drive device, which is an engine or a drive motor, in accordance with a control signal from the controller 19. A brake actuator 21c causes a braking device to operate in accordance with a control signal from the controller 19.

Next, the parking assistance control performed by the controller 19 will be described. For example, the controller 19 may execute parking assistance control to assist parking with a pre-registered parking position candidate set as a target parking position. In the following description, a control mode of the parking assistance control to assist parking with a pre-registered parking position candidate set as a target parking position is sometimes referred to as "first assistance mode". In addition, for example, the controller 19 may execute parking assistance control to assist parking with a target parking position set without using a pre-registered parking position candidate. In the following description, a control mode of the parking assistance control to assist parking with a target parking position set without using a pre-registered parking position candidate is sometimes referred to as "second assistance mode".

FIGS. 2A and 2B are schematic diagrams descriptive of the parking assistance control in the first assistance mode. When the parking assistance control in the first assistance mode is used, a target parking position 31 at which the own vehicle 1 is to be parked is registered in a parking assistance device 10 in advance. Specifically, a target object existing in surroundings of the target parking position 31 is extracted and stored (registered) in the storage device 19b in advance. In the following description, a target object in the surroundings of the target parking position 31 to be stored in the storage device 19b is referred to as "learned target object". In FIG. 2A, circular marks schematically represent learned target objects. When the target parking position 31 is to be registered in the parking assistance device 10, the user performs an operation to instruct registration of the target parking position 31 (hereinafter, sometimes referred to as "registration operation").

For example, the controller 19 detects a target object in the surroundings of the own vehicle 1 by the external sensors 15 and stores the detected target object as a learned target object when the own vehicle 1 is positioned in a vicinity of the target parking position 31 (for example, when the user parks the own vehicle 1 at the target parking position 31 by manual driving). For example, the controller 19 may detect a target object from a surrounding image that is obtained by capturing the surroundings of the own vehicle 1 by the camera. For example, the controller 19 may detect, as a target object, an edge point where luminance changes between adjacent pixels by a predetermined amount or more or a point having a characteristic shape (a feature point), such as an edge or a corner of a target object like a pavement marking, a road boundary, an obstacle, or the like, in the captured image obtained by capturing the surroundings by the camera.

The controller 19 stores learned target object data relating to a learned target object in the storage device 19b. For example, the learned target object data may include data representing a feature amount of a learned target object (hereinafter, referred to as "feature amount data") and data representing a relative positional relationship between the target parking position 31 and the learned target object (hereinafter, referred to as "relative position data").

As the relative position data, a relative position of a learned target object with reference to the target parking position 31 may be stored. For example, the controller 19 can acquire a position of a learned target object detected when the own vehicle 1 is parked at the target parking position 31 as a relative position of the learned target object with reference to the target parking position 31. The controller 19 may store coordinates of a learned target object and the target parking position 31 in a coordinate system with a fixed point as a reference point (hereinafter, referred to as "map coordinate system").

FIG. 2B is an explanatory diagram of an example of processing performed when parking assistance is performed. The controller 19 starts the parking assistance control of the own vehicle 1 when a user operation instructing start of the parking assistance control of the own vehicle 1 is performed (hereinafter, sometimes referred to as "starting operation"). For example, the starting operation may be an operation of a parking switch 17 by the user. In addition, the controller 19 may automatically start the parking assistance control when the own vehicle 1 approaches the target parking position 31, which is a registered parking position candidate. The controller 19 may be able to be set to an automatic start mode in which the controller 19 automatically starts the parking assistance control when the own vehicle 1 approaches the registered target parking position 31 or a manual start mode in which the controller 19 does not automatically start the parking assistance control even when the own vehicle 1 approaches the registered target parking position 31, by switching therebetween.

When the parking assistance control is started, the controller 19 extracts a target object in the surroundings of the own vehicle 1 by the external sensors 15. In the following description, a target object in the surroundings of the own vehicle 1 that is extracted when the parking assistance is performed is referred to as "surrounding target object". In FIG. 2B, triangular marks represent surrounding target objects. The controller 19 detects the target parking position 31 by matching a learned target object and a surrounding target object with each other and associating the same feature points with each other. The controller 19 calculates a relative position of the own vehicle 1 with respect to the target parking position 31, based on a relative positional relationship between a surrounding target object detected when the parking assistance is performed and the own vehicle 1 and a relative positional relationship between a learned target object associated with the surrounding target object and the target parking position 31.

For example, the controller 19 calculates a position of the target parking position 31 in a coordinate system with reference to the current position of the own vehicle 1 (hereinafter, referred to as "vehicle coordinate system"). Note that when coordinates of the learned target object and the target parking position 31 in the map coordinate system are stored in the storage device 19b, the controller 19 may convert the coordinates of the target parking position 31 in the map coordinate system to coordinates in the vehicle coordinate system, based on the position of the surrounding target object detected when the parking assistance is performed and the position of the learned target object in the map coordinate system. The controller 19 may calculate the self-position of the own vehicle 1 in the map coordinate system, based on the position of the surrounding target object detected when the parking assistance is performed and the position of the learned target object in the map coordinate system, and calculate the relative position of the own vehicle 1 with respect to the target parking position 31 from a difference between the coordinates of the own vehicle 1 and the coordinates of the target parking position 31 in the map coordinate system.

The controller 19 calculates a target parking route 34 starting from a current position 33 of the own vehicle 1 and reaching the target parking position 31, based on the relative position of the own vehicle 1 with respect to the target parking position 31. The controller 19 performs the parking assistance control of the own vehicle 1, based on the calculated target parking route 34.

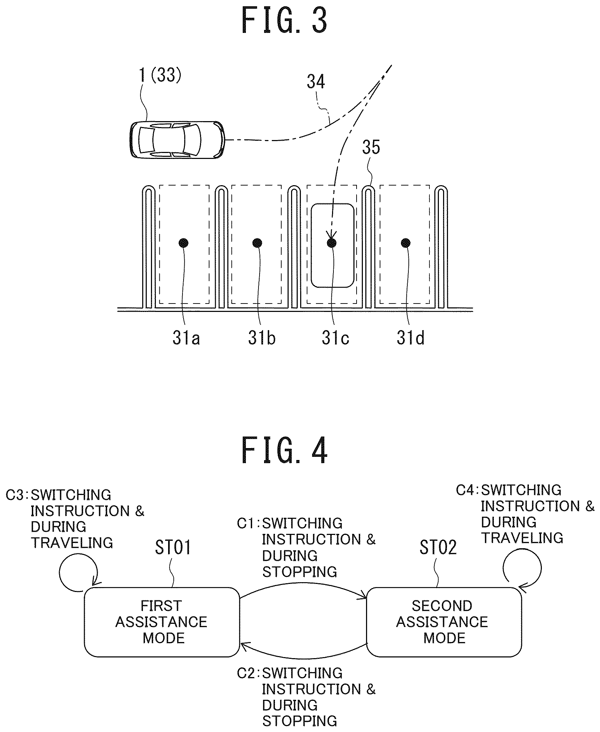

FIG. 3 is a schematic diagram descriptive of the parking assistance control in the second assistance mode. In a case of the second assistance mode, the user performing a starting operation of instructing start of the parking assistance control also causes the controller 19 to start the parking assistance of the own vehicle 1. When the controller 19 starts the parking assistance control in the second assistance mode, the controller 19 detects empty spaces 31a to 31d where the own vehicle 1 can be parked in the surroundings of the own vehicle 1, based on a detection result of the external sensors 15 detecting white lines 35 in the surroundings of the own vehicle 1 or surrounding objects around the own vehicle 1 and sets one of the empty spaces 31a to 31d as a target parking position. Hereinafter, one of the empty spaces 31a to 31d that is set as the target parking position is sometimes referred to as "target parking position 31".

For example, the controller 19 may set an empty space where the own vehicle 1 can be parked in the surroundings of the own vehicle 1 as the target parking position 31, based on a detection result of parking slot lines 35 that indicate a parking space. In addition, for example, the controller 19 may detect parked vehicles as surrounding objects around the own vehicle 1 and set an inter-vehicle space between the parked vehicles as the target parking position 31.

The controller 19 calculates a target parking route 34 starting from a current position 33 of the own vehicle 1 and reaching the target parking position 31. The controller 19 performs the parking assistance control of the own vehicle 1, based on the calculated target parking route 34.

The user can arbitrarily switch the control mode of the parking assistance control between the first assistance mode and the second assistance mode by operating the mode switching switch 18. In the following description, an instruction to switch the control mode of the parking assistance control through operation of the mode switching switch 18 is sometimes referred to as "switching instruction".

However, when the user attempts to switch the control mode while the own vehicle 1 is traveling, there is a risk that attention of the user to the surroundings is distracted due to the switching operation. Therefore, the controller 19 permits, in a case where when accepting, while having selected one mode of the first assistance mode and the second assistance mode, a switching instruction to the other mode from the user, the own vehicle 1 is stopping, switching from the one mode to the other mode. On the other hand, the controller 19 does not permit, in a case where when accepting the switching instruction, the own vehicle 1 is not stopping, switching from the one mode to the other mode. In this configuration, when determining whether or not the own vehicle 1 is stopping, the controller 19 may, for example, determine whether or not speed detected by a vehicle speed sensor is 0 km/h and determine, when the speed detected by the vehicle speed sensor is 0 km/h, that the own vehicle 1 is stopping. The controller 19 may set a margin and determine that the own vehicle 1 has come to a stop when the speed detected by the vehicle speed sensor is less than or equal to a predetermined speed.

### (Operation)

FIG. 4 is a state transition diagram of an example of operating states of the parking assistance device 10 of a first embodiment. When the user performs a starting operation of instructing start of the parking assistance control, the controller 19 starts the parking assistance control and the control mode of the parking assistance control transitions to either the first assistance mode (ST01) or the second assistance mode (ST02). For example, when a registered parking position candidate exists in a vicinity of the current position of the own vehicle 1, the control mode may transition to the first assistance mode (ST01), and when no registered target parking candidate exists in the vicinity of the current position of the own vehicle 1, the control mode may transition to the second assistance mode (ST02).

When the controller 19 accepts a switching instruction while the control mode is the first assistance mode (ST01) and the own vehicle 1 is stopping, the control mode transitions to the second assistance mode (ST02) (C1). In addition, when the controller 19 accepts a switching instruction while the control mode is the second assistance mode (ST02) and the own vehicle 1 is stopping, the control mode transitions to the first assistance mode (ST01) (C2).

On the other hand, even when the controller 19 accepts a switching instruction while the control mode is the first assistance mode (ST01) and the own vehicle 1 is traveling, the control mode does not transition to the second assistance mode (ST02) (C3). Likewise, even when the controller 19 accepts a switching instruction while the control mode is the second assistance mode (ST02) and the own vehicle 1 is traveling, the control mode does not transition to the first assistance mode (ST01) (C4). By prohibiting the mode switching while the own vehicle 1 is traveling in this way, safety in the switching between the assistance modes is improved in the parking assistance device 10, which has the first assistance mode and the second assistance mode.

### (Second Embodiment)

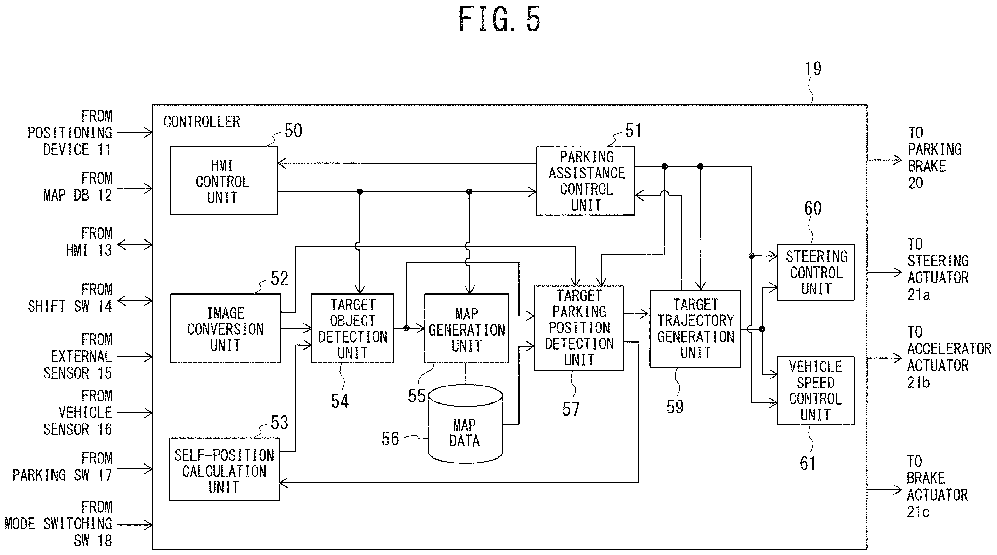

FIG. 5 is a block diagram of an example of a functional configuration of a controller 19. When an HMI control unit 50 detects a registration operation of a target parking position 31 performed by a user, the HMI control unit 50 outputs a map generation command to cause learned target object data to be stored in a storage device 19b, to a map generation unit 55. In addition, when the HMI control unit 50 detects a starting operation of parking assistance control performed by the user, the HMI control unit 50 outputs a control start command to start the parking assistance control to assist parking at a target parking position, to a parking assistance control unit 51.

An image conversion unit 52 converts a captured image captured by a camera to an overhead view image that is an image viewed from a virtual viewpoint directly above an own vehicle 1. The image conversion unit 52 generates a surrounding image that is an image depicting a surrounding region of the own vehicle 1 by converting a captured image to an overhead view image at a predetermined interval and accumulating converted overhead view images along a travel route of the own vehicle 1.

A self-position calculation unit 53 calculates a current position of the own vehicle 1 in a map coordinate system as a self-position by odometry (for example, dead reckoning) based on vehicle information output from vehicle sensors 16.

A target object detection unit 54 detects a target object from a surrounding image output from the image conversion unit 52. The target object detection unit 54 may detect a position of a feature point of a target object and an image feature amount of the feature point as a target object. The target object detection unit 54 outputs the detected position and image feature amount of the feature point to the map generation unit 55 and a target parking position detection unit 57 as target object data. In addition, the target object detection unit 54 outputs the self-position acquired from the self-position calculation unit 53 in synchronization with the detection of the target object to the map generation unit 55 and the target parking position detection unit 57.

When the map generation unit 55 receives a map generation command from the HMI control unit 50 (that is, when the registration operation of the target parking position 31 is performed), the map generation unit 55 generates learned target object data and stores the generated learned target object data in the storage device 19b as map data 56. For example, the map generation unit 55 receives target object data and a self-position of the own vehicle 1 in the map coordinate system that is synchronous with the target object data from the target object detection unit 54. The map generation unit 55 acquires position information of the target parking position 31 in the map coordinate system. For example, the map generation unit 55 may acquire a self-position that the self-position calculation unit 53 calculates when the own vehicle 1 is positioned at the target parking position 31 as the position information of the target parking position 31. The map generation unit 55 generates relative position data, based on a position of a feature point included in the target object data, position information of the own vehicle 1 synchronous with the position of the feature point, and position information of the target parking position 31. The map generation unit 55 acquires feature amount data from the target object data output from the target object detection unit 54. The map generation unit 55 stores learned target object data including the above-described relative position data and feature amount data in the storage device 19b as the map data 56.

In a case where the controller 19 is set to an automatic start mode, the parking assistance control unit 51 determines whether or not a current position of the own vehicle 1 is in a vicinity of a registered parking position candidate. When the current position of the own vehicle 1 is in the vicinity of the registered target parking candidate, the parking assistance control unit 51 sets the target parking candidate as the target parking position 31 and starts the parking assistance control, and causes the parking assistance device 10 to operate in a first assistance mode. On the other hand, in a case where the controller 19 is set to a manual start mode, when the parking assistance control unit 51 receives a control start command from the HMI control unit 50, the parking assistance control unit 51 determines whether or not the current position of the own vehicle 1 is in the vicinity of the registered target parking candidate. When the current position of the own vehicle 1 is in the vicinity of the registered target parking candidate, the parking assistance control unit 51 sets the target parking candidate as the target parking position 31 and causes the parking assistance device 10 to operate in the first assistance mode. When the current position of the own vehicle 1 is not in the vicinity of the registered target parking candidate, the parking assistance control unit 51 causes the parking assistance device 10 to operate in the second assistance mode.

In addition, the parking assistance control unit 51 outputs a parking position calculation command to the target parking position detection unit 57. In the case of the parking assistance control in the first assistance mode, the target parking position detection unit 57 receives target object data output from the target object detection unit 54 as target object data of a surrounding target object and also receives the self-position of the own vehicle 1 in the map coordinate system in synchronization with the reception of the target object data. The target parking position detection unit 57 detects the target parking position 31 by matching a learned target object and a surrounding target object with each other and associating the same feature points with each other. The target parking position detection unit 57 calculates a relative position of the own vehicle 1 with respect to the target parking position 31, based on a relative positional relationship between a surrounding target object and the own vehicle 1 and a relative positional relationship between a learned target object associated with the surrounding target object and the target parking position 31.

In the case of the parking assistance control in the second assistance mode, the target parking position detection unit 57 detects an empty space where the own vehicle 1 can be parked in the surroundings of the own vehicle 1, based on a detection result of external sensors 15 detecting white lines in the surroundings of the own vehicle 1 or surrounding objects around the own vehicle 1 (for example, parked vehicles), and registers the detected empty space as the target parking position 31.

A target trajectory generation unit 59 calculates a target parking route starting from the current position of the own vehicle 1 and reaching the target parking position 31 in the vehicle coordinate system. The target trajectory generation unit 59 calculates a target vehicle speed profile that is a target value of vehicle speed of the own vehicle 1 on the target parking route. A steering control unit 60 controls a steering actuator 21a in such a way that the own vehicle 1 travels along the target parking route. A vehicle speed control unit 61 controls an accelerator actuator 21b and a brake actuator 21c in such a way that the vehicle speed of the own vehicle 1 changes in accordance with the target vehicle speed profile. When the own vehicle 1 reaches the target parking position 31 and the parking assistance control is completed, the parking assistance control unit 51 causes a parking brake 20 to operate and switches the shift position to a parking range.

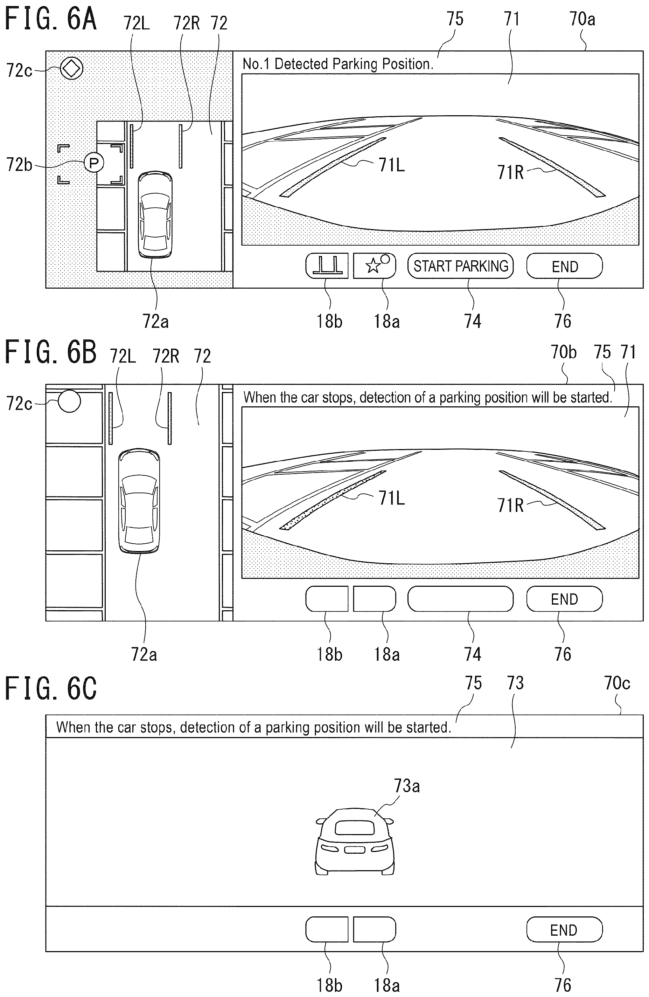

In the case of the parking assistance control in the first assistance mode, the HMI control unit 50 displays parking assistance screens illustrated in FIGS. 6A to 6C on a display device in HMIs 13. FIG. 6A is a schematic diagram of an example of a parking assistance screen 70a that is displayed while a control mode is the first assistance mode and the own vehicle 1 is stopping (hereinafter, sometimes referred to as "first state"). FIG. 6B is a schematic diagram of an example of a parking assistance screen 70b that is displayed while the control mode is the first assistance mode and the own vehicle 1 is traveling at a vehicle speed less than a threshold value Vth (hereinafter, sometimes referred to as "second state"). FIG. 6C is a schematic diagram of an example of a parking assistance screen 70c that is displayed while the control mode is the first assistance mode and the vehicle speed of the own vehicle 1 is greater than or equal to the threshold value Vth (hereinafter, sometimes referred to as "third state"). The threshold value Vth may be, for example, 10 km/h.

Each of the parking assistance screens 70a to 70c includes displays of a first switching button 18a and a second switching button 18b that are GUIs of a mode switching switch 18. When the user operates the first switching button 18a or the second switching button 18b in the parking assistance screen, a touch panel that is provided on the display device as the mode switching switch 18 detects such an operation. The first switching button 18a is a button that accepts a switching instruction to switch the control mode of the parking assistance control from the second assistance mode to the first assistance mode, and the second switching button 18b is a button that accepts a switching instruction to switch the control mode of the parking assist control from the first assistance mode to the second assistance mode.

The second switching button 18b in the parking assistance screen 70a is enabled. Thus, in the first state, the HMI control unit 50 accepts operation of the second switching button 18b performed by the user. Therefore, when the second switching button 18b is operated in the first state, the parking assistance control unit 51 switches the control mode to the second assistance mode. On the other hand, the second switching buttons 18b in the parking assistance screens 70b and 70c are disabled. Thus, in the second and third states, the HMI control unit 50 does not accept operation of the second switching button 18b. Therefore, even when the second switching button 18b is operated while the own vehicle 1 is traveling, the parking assistance control unit 51 does not switch the control mode.

In addition, each of the parking assistance screens 70a and 70b includes, as surrounding images generated by capturing the surroundings of the own vehicle 1, a captured image 71 captured by the camera in the external sensors 15 and an overhead view image 72 generated by converting captured images captured by the camera. On the other hand, the parking assistance screen 70c includes a CG image 73 that includes an icon 73a of the own vehicle 1 viewed from the rear, in place of the captured image 71 and the overhead view image 72. That is, in each of the first and second states, the HMI control unit 50 displays the captured image 71 and the overhead view image 72 on the display device, and in the third state, the HMI control unit 50 displays neither the captured image 71 nor the overhead view image 72 on the display device.

Note that in the captured image 71, vehicle width boundary guide lines 71L and 71R that represent left and right boundaries of vehicle width of the own vehicle 1, respectively are displayed in a superimposing manner.

In addition, in the overhead view image 72, an icon 72a that represents the current position of the own vehicle 1 in the overhead view image 72 and vehicle width boundary guide lines 72L and 72R that represent the left and right boundaries of the vehicle width of the own vehicle 1, respectively are displayed in a superimposing manner.

In addition, in the parking assistance screen 70a of the first state, a target parking position mark 72b that represents a target parking position detected by the target parking position detection unit 57 and an adjustment switch 72c to accept user operation to finely adjust the target parking position are displayed in a superimposing manner on the overhead view image 72. Note that when the target parking position detection unit 57 detects a plurality of target parking positions existing in a vicinity of the current position of the own vehicle 1, the first switching button 18a is used as a switching button to select a target parking position at which the own vehicle 1 is to be parked from among the plurality of target parking position candidates. In addition, in the example of the overhead view image 72 of the first state in FIG. 6A, by reducing a scale of the overhead view image 72 compared with the overhead view image 72 of the second state in FIG. 6B, an area of a predetermined size of a parking space at the target parking position is displayed in the parking assistance screen 70a. In the example in FIG. 6A, the whole area of the parking space is displayed.

The parking assistance screen 70a of the first state includes a parking start button 74 to instruct start of the parking assistance. When the HMI control unit 50 accepts an operation of the parking start button 74 by the user, the parking assistance control unit 51 starts the parking assistance to assist parking at the target parking position. For example, the parking assistance control unit 51 controls the own vehicle 1 to travel to the target parking position along the target parking route of the own vehicle 1.

In the parking assistance screen 70b of the second state, the target parking position mark 72b is not displayed and the parking start button 74 is disabled. Thus, in the second state, the parking assistance control unit 51 does not start the parking assistance.

Further, each of the parking assistance screens 70a to 70c includes a message display area 75 in which a notification such as a visual message is displayed and an end button 76 to instruct suspension of the parking assistance control. For example, in the parking assistance screen 70a of the first state, a notification, such as a visual message, that indicates success or failure of detection of the target parking position may be displayed in the message display area 75. In addition, in each of the parking assistance screen 70b of the second state and the parking assistance screen 70c of the third state, a notification, such as a visual message, that notifies that when the own vehicle 1 stops, the detection of the target parking position is started may be displayed in the message display area 75.

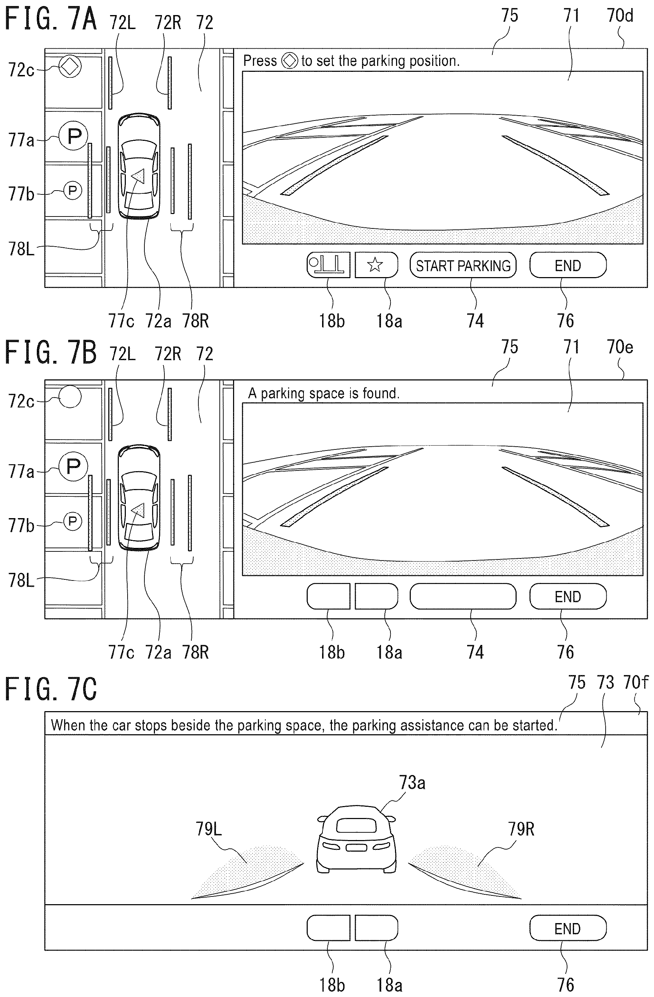

In contrast, in the case of the parking assistance control in the second assistance mode, the HMI control unit 50 displays parking assistance screens illustrated in FIGS. 7A to 7C on the display device in the HMIs 13. FIG. 7A is a schematic diagram of an example of a parking assistance screen 70d that is displayed while the control mode is the second assistance mode and the own vehicle 1 is stopping (hereinafter, sometimes referred to as "fourth state"). FIG. 7B is a schematic diagram of an example of a parking assistance screen 70e that is displayed while the control mode is the second assistance mode and the own vehicle 1 is traveling at a vehicle speed less than the threshold value Vth (hereinafter, sometimes referred to as "fifth state"). FIG. 7C is a schematic diagram of an example of a parking assistance screen 70f that is displayed while the control mode is the second assistance mode and the vehicle speed of the own vehicle 1 is greater than or equal to the threshold value Vth (hereinafter, sometimes referred to as "sixth state").

A first switching button 18a in the parking assistance screen 70d is enabled. Thus, in the fourth state, the HMI control unit 50 accepts operation of the first switching button 18a performed by the user. Therefore, when the first switching button 18a is operated in the second state, the parking assistance control unit 51 switches the control mode to the first assistance mode. On the other hand, first switching buttons 18a in the parking assistance screens 70e and 70f are disabled. Therefore, even when the first switching button 18a is operated while the own vehicle 1 is traveling, the parking assistance control unit 51 does not switch the control mode to the first assistance mode.

Each of the parking assistance screens 70d and 70e includes a captured image 71 captured by the camera and an overhead view image 72. On the other hand, the parking assistance screen 70f includes a CG image 73 in place of the captured image 71 and the overhead view image 72. That is, in each of the fourth and fifth states, the HMI control unit 50 displays the captured image 71 and the overhead view image 72 on the display device, and in the sixth state, the HMI control unit 50 displays neither the captured image 71 nor the overhead view image 72 on the display device.

In the captured image 71, vehicle width boundary guide lines 71L and 71R are displayed in a superimposing manner. In each of the overhead view images 72 in the parking assistance screens 70d and 70e, an icon 72a and vehicle width boundary guide lines 72L and 72R are displayed in a superimposing manner.

In addition, in each of the parking assistance screen 70d of the fourth state and the parking assistance screen 70e of the fifth state, target parking position marks 77a and 77b that represent empty spaces that the target parking position detection unit 57 detects as candidates for the target parking position, a direction indication mark 77c that indicates a direction in which an empty space is detected, and an adjustment switch 72c are displayed in a superimposing manner on the overhead view image 72. In a case of selecting a target parking position at which the own vehicle 1 is to be parked from a plurality of empty spaces, the user directly touches the target parking position mark 77a or 77b. The target parking position mark 77a that represents an empty space that is currently selected as the target parking position is displayed larger than the target parking position mark 77b that represents another empty space. In addition, when the target parking position is to be finely adjusted within a parking slot, the user directly touches the adjustment switch 72c.

Further, in each of the overhead view images 72 in the parking assistance screens 70d and 70e, slot line search range guide lines 78L and 78R that indicate search ranges for parking slot lines are displayed in a superimposing manner. Each of the slot line search range guide lines 78L and 78R represent a region sandwiched between a pair of adjacent lines as a search range for a parking slot line. Note that in the overhead view images 72 in the parking assistance screen 70a of the first state and the parking assistance screen 70b of the second state, the slot line search range guide lines 78L and 78R are not displayed, as illustrated in FIGS. 6A and 6B.

In the CG image 73 in the parking assistance screen 70f of the sixth state, slot line search range marks 79L and 79R that schematically represent search ranges in which a target parking position is searched for are displayed.

In addition, the parking assistance screen 70d of the fourth state includes a parking start button 74. When the HMI control unit 50 accepts an operation of the parking start button 74 by the user, the parking assistance control unit 51 starts the parking assistance to assist parking at the target parking position. On the other hand, in the parking assistance screen 70e of the fifth state, a target parking position mark 72b is not displayed and a parking start button 74 is disabled. Thus, in the second state, the parking assistance control unit 51 does not start the parking assistance.

Each of the parking assistance screens 70d to 70e includes a message display area 75 and an end button 76. For example, in the parking assistance screen 70d of the fourth state, a notification, such as a visual message, that notifies that the target parking position can be finely adjusted within a parking slot by operating the adjustment switch 72c may be displayed in the message display area 75. In the parking assistance screen 70e of the fifth state, a notification, such as a visual message, that, when a target parking position is detected, notifies that the target parking position is detected may be displayed in the message display area 75. In addition, in the parking assistance screen 70f of the sixth state, a notification, such as a visual message, that notifies that when the own vehicle 1 stops in a vicinity of a parking space, the parking assistance can be started may be displayed in the message display area 75. Note that in the parking assistance screen 70e of the fifth state, a notification, such as a visual message, that notifies that when the own vehicle 1 stops in a vicinity of a parking space, the parking assistance can be started may be displayed in the message display area 75, and in the parking assistance screen 70f of the sixth state, a notification, such as a visual message, that, when a target parking position is detected, notifies that the target parking position is detected may be displayed in the message display area 75.

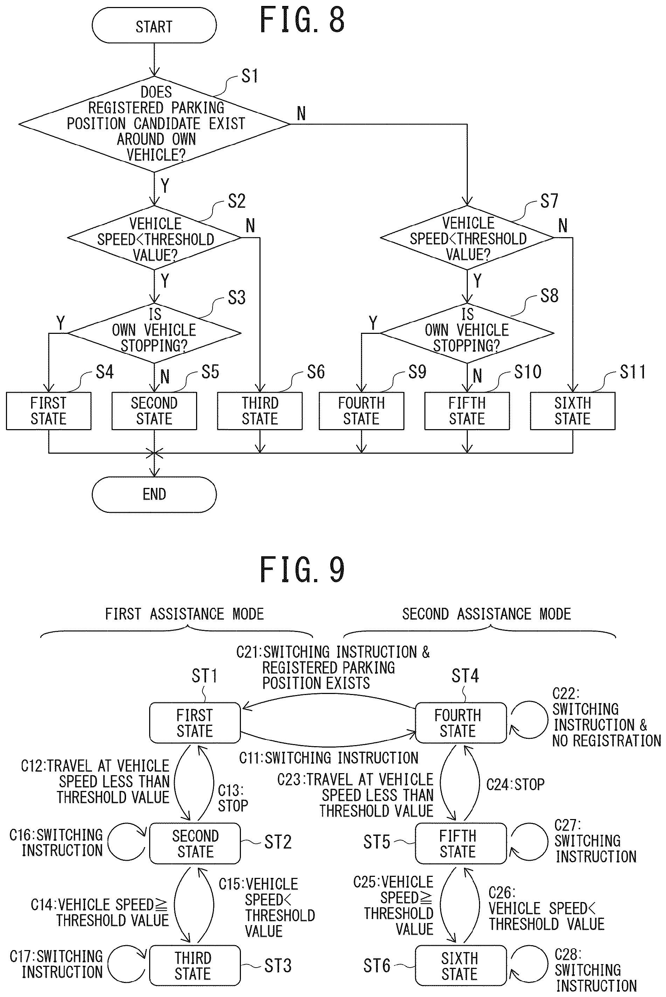

FIG. 8 is a flowchart of an operation example at the start of the parking assistance control. In step S1, the parking assistance control unit 51 determines whether or not the current position of the own vehicle 1 is in a vicinity of a registered parking position candidate. When the current position is in the vicinity of the parking position candidate (step S1: Y), the control mode is set to the first assistance mode and the process proceeds to step S2. When the current position is not in the vicinity of the parking position candidate (step S1: N), the control mode is set to the second assistance mode and the process proceeds to step S7.

In step S2, the parking assistance control unit 51 determines whether or not vehicle speed of the own vehicle 1 is less than a threshold value Vth. When the vehicle speed is less than the threshold value Vth (step S2: Y), the process proceeds to step S3. When the vehicle speed is not less than the threshold value Vth (step S2: N), the process proceeds to step S6. In step S3, the parking assistance control unit 51 determines whether or not the own vehicle 1 is stopping. When the own vehicle 1 is stopping (step S3: Y), the process proceeds to step S4. When the own vehicle 1 is not stopping (step S3: N), the process proceeds to step S5.

In step S4, the parking assistance device 10 is brought into the first state, switching to the second assistance mode is permitted, and the parking assistance screen 70a is displayed on the display device. In step S5, the parking assistance device 10 is brought into the second state, the switching to the second assistance mode is prohibited, and the parking assistance screen 70b is displayed on the display device. In step S6, the parking assistance device 10 is brought into the third state, the switching to the second assistance mode is prohibited, and the parking assistance screen 70c is displayed on the display device.

On the other hand, in step S7, the parking assistance control unit 51 determines whether or not the vehicle speed of the own vehicle 1 is less than the threshold value Vth. When the vehicle speed is less than the threshold value Vth (step S7: Y), the process proceeds to step S8. When the vehicle speed is not less than the threshold value Vth (step S7: N), the process proceeds to step S11.

In step S8, the parking assistance control unit 51 determines whether or not the own vehicle 1 is stopping. When the own vehicle 1 is stopping (step S8: Y), the process proceeds to step S9. When the own vehicle 1 is not stopping (step S8: N), the process proceeds to step S10. In step S9, the parking assistance device 10 is brought into the fourth state, switching to the first assistance mode is permitted, and the parking assistance screen 70d is displayed on the display device. In step S10, the parking assistance device 10 is brought into the fifth state, the switching to the first assistance mode is prohibited, and the parking assistance screen 70e is displayed on the display device. In step S11, the parking assistance device 10 is brought into the sixth state, the switching to the first assistance mode is prohibited, and the parking assistance screen 70f is displayed on the display device.

FIG. 9 is a state transition diagram of an example of operating states of the parking assistance device 10 of the first embodiment. In the first state (ST1), when a switching instruction is accepted, the state of the parking assistance device 10 transitions to the fourth state (ST4) (C11). That is, the control mode switches from the first assistance mode to the second assistance mode. In the first state, when the own vehicle 1 travels at a vehicle speed less than the threshold value Vth, the state of the parking assistance device 10 transitions to the second state (ST2) (C12). In the second state, when the own vehicle 1 stops, the state of the parking assistance device 10 returns to the first state (C13), and when the vehicle speed becomes greater than or equal to the threshold value Vth, the state of the parking assistance device 10 transitions to the third state (ST3) (C14). In the third state, when the vehicle speed becomes less than the threshold value Vth, the state of the parking assistance device 10 returns to the second state (C15). In the second and third states, even when a switching instruction is accepted, the state does not transition (C16 and C17). That is, the control mode does not switch from the first assistance mode to the second assistance mode.

In the fourth state (ST4), when at least one target parking position is registered in the storage device 19b and a switching instruction is accepted, the state of the parking assistance device 10 transitions to the first state (ST1) (C21). That is, the control mode switches from the second assistance mode to the first assistance mode. In a case where no target parking position has been registered yet in the storage device 19b, even when a switching instruction is accepted, the state does not transition (C22). That is, the control mode does not switch from the second assistance mode to the first assistance mode. In the fourth state, when the own vehicle 1 travels at a vehicle speed less than the threshold value Vth, the state of the parking assistance device 10 transitions to the fifth state (ST5) (C23). In the fifth state, when the own vehicle 1 stops, the state of the parking assistance device 10 returns to the fourth state (C24), and when the vehicle speed becomes greater than or equal to the threshold value Vth, the state of the parking assistance device 10 transitions to the sixth state (ST6) (C25). In the sixth state, when the vehicle speed becomes less than the threshold value Vth, the state of the parking assistance device 10 returns to the fifth state (C26). In the fifth and fifth states, even when a switching instruction is accepted, the state does not transition (C27, C28). That is, the control mode does not switch from the second assistance mode to the first assistance mode.

### (Advantageous Effects of Embodiments)

(1) A controller 19 permits, in a case where when accepting, while having selected one mode of a first assistance mode and a second assistance mode, a switching instruction to the other mode, the own vehicle is stopping, switching from the one mode to the other mode and does not permit, in a case where when accepting the switching instruction, the own vehicle is not stopping, switching from the one mode to the other mode. Because of this configuration, in the parking assistance device that has a plurality of different assistance modes, safety in switching between the assistance modes can be improved.
(2) In the first assistance mode, the controller 19 may: store data representing a relative positional relationship between a target object existing in surroundings of a target parking position and the target parking position in a storage device as learned target object data in advance; detect a surrounding target object, the surrounding target object being a target object existing in surroundings of the own vehicle 1; and detect the pre-registered parking position candidate, based on the learned target object data and the surrounding target object. In the second assistance mode, the controller 19 may: detect an empty space where the own vehicle 1 can be parked in surroundings of the own vehicle 1, based on a detection result of a sensor detecting a white line or an object in surroundings of the own vehicle 1; and set a detected empty space as the target parking position. When the own vehicle 1 is positioned in a vicinity of the pre-registered parking position candidate, the controller 19 may select the first assistance mode at a start of parking assistance control to assist parking of an own vehicle 1 at the target parking position. Because of this configuration, it is possible to appropriately select a control mode at the start of the parking assistance control depending on presence or absence of registration of the target parking position.
(3) The controller 19 may display, when vehicle speed of the own vehicle 1 is less than a threshold value, a surrounding image generated by capturing surroundings of the own vehicle 1 on a display device and may not display, when vehicle speed of the own vehicle 1 is greater than or equal to the threshold value, the surrounding image on a display device. Because of this configuration, it is possible to appropriately select a screen display depending on vehicle speed.
(4) The controller 19 may display, when the second assistance mode is selected, a guide line indicating a search range for a parking slot line on the surrounding image and may not display, when the first assistance mode is selected, the guide line on the surrounding image. In addition, the controller 19 may display, when the second assistance mode is selected, a search range in which the target parking position is searched for on a display device and may not display, when the first assistance mode is selected, the search range on the display device. Because of this configuration, it is possible to set a screen display according to the control mode of the parking assistance control.
(5) The controller 19 may display, when the first assistance mode is selected and the own vehicle 1 is traveling at a vehicle speed less than a threshold value, a notification notifying that when the own vehicle 1 stops, detection of the target parking position is started on a display device and display, when the second assistance mode is selected and the empty parking space is detected while the own vehicle 1 is traveling at a vehicle speed less than a threshold value, a notification notifying that the empty parking space is detected on the display device. In addition, the controller 19 may display, when the first assistance mode is selected and the own vehicle 1 is traveling, a notification notifying that when the own vehicle 1 stops, setting or detection of the target parking position is started on a display device and display, when the second assistance mode is selected and the own vehicle 1 is traveling, a notification notifying that when the own vehicle 1 stops, parking assistance can be started on the display device. Because of this configuration, it is possible to present information in accordance with a combination of the control mode of the parking assistance control and vehicle speed of the own vehicle 1 to the user.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

### Reference Signs List

- 1: Own vehicle
- 10: Parking assistance device
- 11: Positioning device
- 12: Map database
- 13: Human-machine interface
- 14: Shift switch
- 15: External sensor
- 16: Vehicle sensor
- 17: Parking switch
- 18: Mode switching switch
- 19: Controller
- 19a: Processor
- 19b: Storage device
- 20: Parking brake
- 21a: Steering actuator
- 21b: Accelerator actuator
- 21c: Brake actuator
- 50: HMI control unit
- 51: Parking assistance control unit
- 52: Image conversion unit
- 53: Self-position calculation unit
- 54: Target object detection unit
- 55: Map generation unit
- 56: Map data
- 57: Target parking position detection unit
- 59: Target trajectory generation unit
- 60: Steering control unit
- 61: Vehicle speed control unit

## Claims

1. A parking assistance method for assisting parking of an own vehicle at a target parking position, the parking assistance method comprising:
permitting, in a case where when accepting, while having selected one mode of a first assistance mode for assisting parking with a pre-registered parking position candidate set as the target parking position and a second assistance mode for assisting parking with the target parking position set without using a pre-registered parking position candidate, a switching instruction to the other mode, the own vehicle is stopping, switching from the one mode to the other mode; and
not permitting, in a case where when accepting the switching instruction, the own vehicle is not stopping, switching from the one mode to the other mode.

2. The parking assistance method according to claim 1 comprising, in the first assistance mode: storing data representing a relative positional relationship between a target object existing in surroundings of a target parking position and the target parking position in a storage device as learned target object data in advance; detecting a surrounding target object, the surrounding target object being a target object existing in surroundings of the own vehicle; and detecting the pre-registered parking position candidate, based on the learned target object data and the surrounding target object.

3. The parking assistance method according to claim 1 or 2 comprising, in the second assistance mode: detecting an empty space where the own vehicle can be parked in surroundings of the own vehicle, based on a detection result of a sensor detecting a white line or an object in surroundings of the own vehicle; and setting a detected empty space as the target parking position.

4. The parking assistance method according to any one of claims 1 to 3 comprising:
selecting, when the own vehicle is positioned in a vicinity of the pre-registered parking position candidate, the first assistance mode at a start of parking assistance control to assist parking of an own vehicle at the target parking position; and
selecting, when the own vehicle is not positioned in a vicinity of the pre-registered parking position candidate, the second assistance mode at a start of the parking assistance control.

5. The parking assistance method according to any one of claims 1 to 4 comprising:
displaying, when vehicle speed of the own vehicle is less than a threshold value, a surrounding image generated by capturing surroundings of the own vehicle on a display device; and not displaying, when vehicle speed of the own vehicle is greater than or equal to the threshold value, the surrounding image on a display device.

6. The parking assistance method according to claim 5, wherein the parking assistance method displays, when the second assistance mode is selected, a guide line indicating a search range for a parking slot line on the surrounding image and does not display, when the first assistance mode is selected, the guide line on the surrounding image.

7. The parking assistance method according to any one of claims 1 to 4, wherein
the parking assistance method displays, when the first assistance mode is selected and the own vehicle is traveling at a vehicle speed less than a threshold value, a notification notifying that when the own vehicle stops, detection of the target parking position is started on a display device, and
the parking assistance method displays, when the second assistance mode is selected and the empty parking space is detected while the own vehicle is traveling at a vehicle speed less than a threshold value, a notification notifying that the empty parking space is detected on the display device.

8. The parking assistance method according to any one of claims 1 to 4, wherein
the parking assistance method displays, when the first assistance mode is selected and the own vehicle is traveling, a notification notifying that when the own vehicle stops, setting or detection of the target parking position is started on a display device; and
the parking assistance method displays, when the second assistance mode is selected and the own vehicle is traveling, a notification notifying that when the own vehicle stops, parking assistance can be started on the display device.

9. The parking assistance method according to any one of claims 1 to 4, wherein the parking assistance method displays, when the second assistance mode is selected, a search range in which the target parking position is searched for on a display device and does not display, when the first assistance mode is selected, the search range on the display device.

10. A parking assistance device configured to assist parking of an own vehicle at a target parking position, the parking assistance device comprising:
a user interface configured to accept a switching instruction between a first assistance mode for assisting parking with a pre-registered parking position candidate set as the target parking position and a second assistance mode for assisting parking with the target parking position set without using a pre-registered parking position candidate; and
a controller configured to permit, in a case where when accepting, while having selected one mode of the first assistance mode and the second assistance mode, a switching instruction to the other mode, the own vehicle is stopping, switching from the one mode to the other mode and not to permit, in a case where when accepting the switching instruction, the own vehicle is not stopping, switching from the one mode to the other mode.
